# EUROPÄISCHE PATENTSCHRIFT

(11) **EP 2 783 410 B1**
(45) Veröffentlichungstag und Bekanntmachung des Hinweises auf die Patenterteilung: **04.01.2017**
(21) Anmeldenummer: 12786965.9
(22) Anmeldetag: 09.11.2012
(51) Int. Cl.: H01M 4/134, H01M 4/36, H01M 4/38, H01M 4/62, H01M 10/52, C23C 22/02, C01D 15/06, H01M 4/04, H01M 4/40, H01M 4/58, H01M 4/02

(54) **LI2S@C BESCHICHTETES LITHIUMMETALLPRODUKT, VERFAHREN ZU DESSEN HERSTELLUNG UND VERWENDUNG**
LI2S@C-COATED LITHIUM METAL PRODUCT, METHOD FOR THE PRODUCTION THEREOF, AND USE
PRODUIT DE MÉTAL LITHIUM REVÊTU DE LI2S@C, PROCÉDÉ DE PRÉPARATION ET UTILISATION

(30) Priorität: 09.11.2011 DE 102011086035
(43) Veröffentlichungstag der Anmeldung: 01.10.2014
(73) Patentinhaber: Rockwood Lithium GmbH, 65926 Frankfurt/M (DE)
(72) Erfinder: WIETELMANN, Ulrich, 61381 Friedrichsdorf (DE); EMMEL, Ute, 65929 Frankfurt am Main (DE); HARTNIG, Christoph, 65817 Eppstein (DE); LANG, Sebastian, 64347 Griesheim (DE)
(74) Vertreter: Rottmayer, Hans
(86) Internationale Anmeldenummer: PCT/EP2012/072234
(87) Internationale Veröffentlichungsnummer: WO 2013/068523

(56) Entgegenhaltungen:
- WO-A1-2012/106102
- WO-A1-2012/171889
- WO-A2-2012/171888
- US-A1- 2004 091 776
- PEARSON T G ET AL: "LVI. The polysulphides of the, alkali metals. Part II. Lithium", JOURNAL OF THE CHEMICAL SOCIETY, CHEMICAL SOCIETY, LETCHWORTH; GB, 1. Januar 1931 (1931-01-01), Seiten 413-420, XP002686428, ISSN: 0368-1769, DOI: 10.1039/JR9310000413

## Beschreibung

Die Erfindung betrifft ein partikuläres Lithiummetall/Lithiumsulfid-Kompositmaterial, ein Verfahren zur Herstellung eines Li₂S@C beschichtetes Lithiummetallproduktes und dessen Verwendung.

Wiederaufladbare elektrochemische Speichersysteme erlangen gegenwärtig für viele Bereiche des täglichen Lebens eine steigende Bedeutung. Neben den schon seit längerem bestehenden Anwendungen als Automobilstarterbatterie und als Energiequelle für die portable Elektronik werden in der Zukunft starke Zuwächse für den Antrieb von Elektroautos und für die stationäre Energiespeicherung vorhergesagt. Für die neuen Anwendungen kommen traditionelle Blei/Schwefelsäureakkumulatoren nicht in Frage, weil sie eine viel zu geringe Kapazität aufweisen und sie nicht genügend häufig zyklisierbar sind. Beste Chancen werden dagegen Lithiumbatterien eingeräumt.

Lithiumakkus nach Stand der Technik haben jedoch ebenfalls für viele Anwendungen eine zu geringe Energiespeicherfähigkeit. Heutige Lithiumionenbatterien weisen spezifische Energiedichten zwischen etwa 100 und 250 Wh/kg auf. Außerdem enthalten sie zumeist teure Elemente wie Kobalt und/oder Nickel. Weitaus höhere (theoretische) Energiedichten weisen Lithium/Schwefel- und Lithium/Luft-Systeme auf:

| Batteriesystem | theoretische Energiedichte | |
|---|---|---|
| | Wh / L | Wh / kg |
| Li-ion (LiC₆ / NMC) | 1710 | 510 |
| Lithium / Schwefel | 2710 | 2450 |
| Lithium / Luft | | 5830 |

Die technischen Herausforderungen bei der Entwicklung von Li/Luftsystemen sind noch derartig gravierend, dass erst frühestens in 10-20 Jahren mit einem marktreifen System gerechnet werden kann (M. Jacoby, Chem. Eng. News, Nov. 22 (2010) 29-31. Deutlich günstiger sehen die Chancen beim Lithium/Schwefelsystem aus. Diese Batterie hat jedoch den Nachteil, dass sie beim Laden und Entladen zu schnell an Kapazität verliert. Ein Grund dafür ist die hohe Reaktivität von Lithiummetall gegenüber organischen Materialien, z.B. den gebräuchlichen Flüssigelektrolyten. Bei diesen Flüssigelektrolyten handelt es sich um Lösungen von Lithiumsalzen wie LiPF₆, Lithium bis(trifluormethylsulfonyl)imid (LiTFSI oder Lithium bis(oxalato)borat (LiBOB) in organischen Lösungsmittel, Kohlensäureestern, Ethern oder Mischungen daraus. Weiterhin wird metallisches Lithium aus Lösungen beim Batterieladevorgang in der Regel nicht homogen (planar), sondern in oberflächenreicher, ästchenartiger Form, also dendritisch, abgeschieden. Die Dendritenbildung stellt vorwiegend ein Sicherheitsproblem dar, da im Extremfall der Separator durchstoßen werden kann, wodurch es zu einem Kurzschluss kommen kann. Darüber hinaus kann die Dendritenbildung zu einem Kapazitätsabfall der galvanischen Zelle führen: nadelförmige Morphologien neigen dazu, sich vom Anoden-Bulk abzuschnüren. Solche metallischen, von der Anode abgetrennten Bruchstücke haben keinen elektronischen Kontakt mehr mit der Anode und sie stehen deshalb nicht mehr als Aktivmaterial für die elektrochemische Lade-/Entladereaktion zur Verfügung.

Weiterhin ist bekannt, dass das als Anode verwendete metallische Lithium gegenüber Flüssigelektrolyten hochreaktiv ist, so dass sich durch Zersetzung löslicher Lithiumpolysulfide eine Li₂S-Schicht auf der Anode bildet. Aufgrund der schlechten elektronischen und ionischen Leitfähigkeit dieser Schicht nimmt die Impedanz, also der Durchtrittswiderstand zu, was gleichbedeutend mit einem Leistungsabfall der Zelle ist. Außerdem wird das Lithium zu einer nicht mehr am Redox-Prozeß teilnehmenden Substanz korrodiert, d.h. die Batteriekapazität nimmt dementsprechend ab. Der Kapazitätsabfall kann in Anwesenheit von Lithiumnitrat vermindert werden (Z. Wen, J. Power Sources 196 (2011) 9839-43). Nachteilig ist aber, dass Lithiumnitrat als Oxidationsmittel gegenüber den organischen Bestandteilen des Elektrolyten reaktiv ist, woraus sich wiederum Sicherheitsprobleme ableiten können.

Es wurde weiterhin vorgeschlagen, die Lithium/Schwefelbatterie im entladenen Zustand zusammenzubauen, d.h. als Anode wird ein lithiumfreies (oder-armes) Material, z.B. ein Zinn/Kohlenstoffkomposit verwendet und als Kathode Lithiumsulfid (B. Scrosati, Angew. Chem. 2010, 122, 2421-4). Leider erweist sich diese Batteriekonfiguration ebenfalls als wenig zyklenstabil. Der Hauptgrund wird darin gesehen, dass sich beim Zyklen lösliche Oligoschwefelverbindungen (z.B. Li₂S₃ und Li₂S₄) bilden können. Dadurch verliert die Kathode an redoxaktivem Material (Y. Li, J. Power Sources 195 (2010) 2945-9; D. Aurbach, J. Electrochem. Soc. 156(8), A694-A702 (2009)).

Zudem ist aus dem Aufsatz von PEARSON T G ET AL: "LVI. The polysulphides of the, alkali metals. Part II. Lithium", JOURNAL OF THE CHEMICAL SOCIETY, CHEMICAL SOCIETY, LETCHWORTH; GB, 1. Januar 1931 (1931-01-01), Seiten 413-420, XP002686428, ein Verfahren zur Herstellung eines Lithiummetall/Lithiumsulfid-Kompositmaterials, umfassend einen geringen Anteil an metallischem Lithium bekannt.

Die Erfindung hat sich die Aufgabe gestellt, ein oberflächenstabilisiertes Anodenmaterial auf Lithiummetallbasis mit hoher spezifischer Oberfläche anzugeben, welches wenig reaktiv und in gängigen Anlagen gefahrlos handhabbar ist, dessen Oberflächenbeschichtung ionisch und elektronisch leitfähig ist, wobei die Oberflächenbeschichtung möglichst keine Fremdelemente (hinsichtlich der jeweiligen Batteriechemie) enthält sowie ein Verfahren zur einfachen und kostengünstigen Herstellung eines solchen Produktes.

Die Aufgabe wird durch ein partikuläres Kern/Schale-Material mit den in Anspruch 1 genannten Merkmalen gelöst. Weiterhin wird ein Verfahren aufgezeigt, das die Erzeugung eines solchen Lithiummetalls mit hoher spezifischer Oberfläche und mit einer passivierenden, jedoch leitfähigen Umhüllung ermöglicht.

Das erfindungsgemäße Produkt wird bevorzugt durch Umsetzung von tröpfchenförmigem geschmolzenem Lithiummetall mit einer Schwefelquelle ausgewählt aus der Gruppe CS₂, S₈, H₂S, COS, SO, SO₂ in einem Kohlenwasserstoff-basierten Lösungsmittel und bei Temperaturen von mindestens 180°C bis maximal 300°C, bevorzugt von 180°C bis 250°C und besonders bevorzugt von 180°C bis 220°C hergestellt. Dabei wird das stöchiometrische Verhältnis zwischen Lithium und Schwefel so gewählt, dass höchstens 50 Gew.-%, bevorzugt 20 Gew.-% und besonders bevorzugt 5 Gew.-% des Lithiummetalls zu einem Lithiumsalz umgesetzt werden. In einer ganz besonders bevorzugten Ausführungsform der Erfindung besitzt das erfindungsgemäße partikuläre Lithiummetall/Lithiumsulfid-Kompositmaterial einen Gehalt an metallischem Lithium von mindestens 97 Gew.-%.

Die Herstellbedingungen sind so zu wählen, dass zunächst ungecoatete Lithiumtröpfchen mit einem mittleren Durchmesser von 300 µm, bevorzugt 100 µm und besonders bevorzugt 80 µm entstehen. Dies erfolgt nach Stand der Technik durch Verwendung eines hohe Scherkräfte einbringenden Rührorgans, beispielsweise einer Dispergierscheibe (Zahnscheibenrührer) oder eines Zerstäubungsrührers, beispielsweise einem Dispergierrührer, "Ultraturrax". Nach der Bildung von Lithiumtröpfchen mit dem gewünschten Partikeldurchmesser erfolgt die Umsetzung mit einer erfindungsgemäßen Schwefelquelle, wodurch die Bildung einer passivierenden, jedoch leitfähigen Oberflächenschichtung bewirkt wird.

Nach Ausbildung der passivierenden, leitfähigen Oberflächenbeschichtung sind die Rühr- und Homogenisierbedingungen so zu wählen, dass die Oberflächenbeschichtung nicht wieder zerstört wird. Dies wird erreicht durch einen wenig abrasiven Rührprozess.

Anstelle eines Hochenergierührers können auch andere dem Stand der Technik entsprechende Dispergierverfahren, beispielsweise Ultraschallzerstäubung, zum Einsatz kommen.

Das Lösungsmittel wird bevorzugt aus der Gruppe gesättigter Kohlenwasserstoffe ausgewählt. Es wurde überraschend gefunden, dass sich bei der Verwendung gesättigter Kohlenwasserstoffe als Lösemittel eine phasenreine, mit nicht-kristallinem ("röntgenamorphem") Kohlenstoff-beschichtete oder -dotierte Oberflächenbeschichtung hauptsächlich bestehend aus Lithiumsulfid entsteht (im Folgenden als Li₂S@C bezeichnet). Dagegen resultieren beim Einsatz von aromatischen oder teilaromatischen Lösungsmitteln häufig mit Lithiumcarbid oder Lithiumhydrid verunreinigte Oberflächenschichten. Bevorzugt werden Lösungsmittel verwendet, die bei den gewählten Umsetzungsbedingungen flüssig sind, die also Siedepunkte von mindestens 180°C, besser mindestens 200°C und besonders bevorzugt Siedepunkte > 220°C aufweisen. Beispiele sind: Decan, Undekan, Dodecan oder beliebige Mischungen dieser genannten Verbindungen, egal ob linear, verzweigt oder zyklisch. Ganz besonders bevorzugt sind kommerziell erhältliche Paraffin-Siedeschnitte, wie z.B. Shellsol^{®} D70 oder D100.

Das eingesetzte Lithiummetall hat bevorzugt eine Reinheit von mindestens 98 Gew.-%, besonders bevorzugt wird es in Batteriequalität eingesetzt. Der Natriumgehalt liegt bevorzugt unter 1000 ppm und besonders bevorzugt unter 100 ppm.

Als Schwefelquelle sind Kohlendisulfid sowie elementarer Schwefel (S₈) und/oder H₂S besonders bevorzugt. Ganz besonders bevorzugt wird Kohlendisulfid oder ein Gemisch aus Kohlendisulfid und elementarem Schwefel verwendet, wobei das Molverhältnis zwischen den beiden Schwefelquellen zwischen 1:10 und 10:1 variieren und das Molverhältnis zwischen Lithium und Gesamtschwefel (also in Form beider Schwefelquellen) 4:1, bevorzugt 10:1 und besonders bevorzugt 40:1 beträgt.

Das erfindungsgemäße Produkt ist im Vergleich zu der üblicherweise verwendeten Lithiumfolie durch eine hohe spezifische Oberfläche, bedingt durch die partikuläre, häufig sphärische Morphologie und Partikelgrößen bevorzugt < 500 µm, gekennzeichnet. Bevorzugte mittlere Partikelgrößen liegen zwischen 1 und 500 µm, bevorzugt 10 und 100 µm und besonders bevorzugt zwischen 15 und 80 µm. Außerdem ist die Oberfläche nicht planar (glatt), sondern eher rau. Da die realisierbare Stromdichte einer galvanischen Zelle u. a. mit der spezifischen Oberfläche der Elektrodenmaterialien skaliert, sind solchermaßen strukturierte Materialien auch für die Erzielung relativ hoher Leistungen, wie sie z.B. für Automobilantriebsbatterien erforderlich sind, geeignet.

Der Kohlenstoffgehalt der erfindungsgemäßen Li₂S@C - Kompositmaterials liegt zwischen 0,1 und 50 Gew.-%, bevorzugt zwischen 1 und 20 Gew.-%. Er lässt sich durch Wahl der Reaktionsbedingungen (vor allem der Temperatur) sowie durch die Wahl der Schwefelquelle variieren. Höhere Kohlenstoffgehalte werden insbesondere dadurch erzielt, dass kohlenstoffhaltige Schwefelverbindungen, bevorzugt Kohlendisulfid (CS₂) und/oder Carbonylsulfid (COS) eingesetzt werden. Die Reaktion kann bei alleinigem Einsatz dieser Verbindungen als Schwefelquelle gemäß

4 Li + CS₂ → 2 Li₂S + C

oder

4 Li + COS → Li₂S + Li₂O + C

erfolgen.

Die erfindungsgemäßen Lithiummetallprodukte mit Li₂S@C-Schale werden für die Herstellung von Batterieanoden eingesetzt. Besonders bevorzugt erfolgt ihre Verwendung für Lithium-Schwefel-Batterien.

Die Erfindung wird nachfolgend an Hand von 2 Beispielen sowie 8 Abbildungen näher erläutert.

Es zeigen:

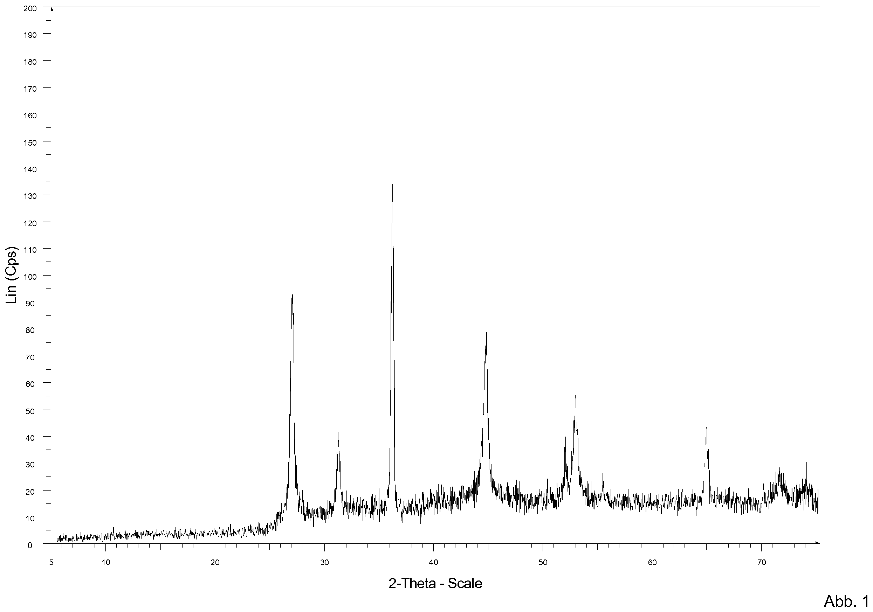

- Abb. 1:: Röntgendiffraktogramm des Produktes, hergestellt nach Beispiel 1, wobei die Peaks x - Li₂S und o - Lithiummetall zugeordnet werden
- Abb. 2:: Röntgendiffraktogramm des Produktes, hergestellt nach Beispiel 2, wobei die Peaks x - Li₂S und o - Lithiummetall zugeordnet werden

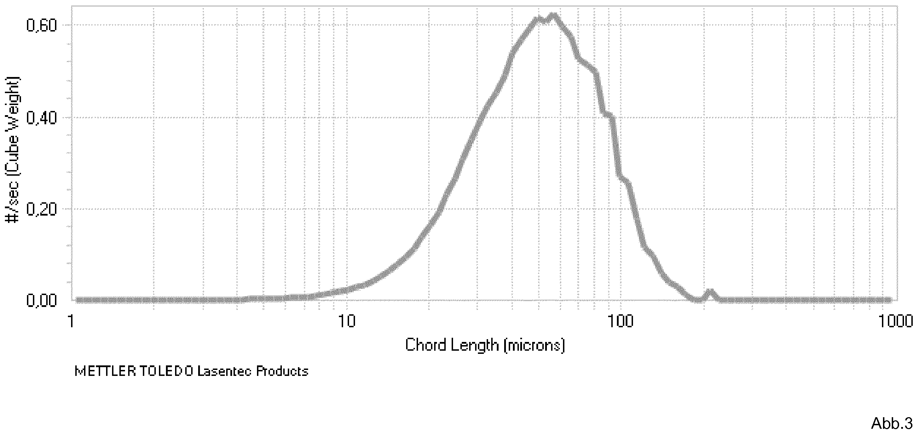

- Abb. 3:: Partikelgrößenverteilung des Produktes ermittelt mit Laserstreulichtmessung, hergestellt nach Beispiel 1
- Abb. 4:: Partikelgrößenverteilung des Produktes ermittelt mit Laserstreulichtmessung, hergestellt nach Beispiel 2
- Abb. 5:: Raster-Elektronen-Mikroskop (REM)-Bild des Produktes, hergestellt nach Beispiel 1
- Abb. 6:: REM-Bild des Produktes, hergestellt nach Beispiel 2
- Abb. 7:: Differential Scanning Calorimetry (DSC) des Produktes, Beispiel 1
- Abb. 8:: DSC des Produktes, Beispiel 2

### Beispiele

### Beispiel 1: Herstellung von Li₂S@C-beschichtetem Lithium aus geschmolzenem Lithiummetall und 2,5 mol-% CS₂ bei 200°C in Paraffinöl

In einem inertisierten (d.h. wasser- und luftfreiem, mit Ar gefüllten) Edelstahl-Doppelmantelreaktor ausgerüstet mit einem Hochenergierührorgan (Ultraturrax) wurden 20,5 g Lithiummetall in 520 g Shellsol^{®} D100 vorgelegt und unter Rühren bei 210°C Manteltemperatur aufgeschmolzen. Nach vollständigem Aufschmelzen wurde das Lithium mit Hilfe des Hochenergierührers zu einer feinen Emulsion verarbeitet (einige Minuten bei 16.000 upm). Dann wurden 5,48 g Kohlendisulfid als 20%ige Lösung in Shellsol^{®} D100 durch eine Reaktoröffnung zugegeben. Die Reaktion war exotherm, erkennbar an einem Anstieg der Innentemperatur von 197°C auf knapp 200°C. Nach Zugabeende wurde der Rührer abgestellt, dann auf 8°C abgekühlt und die Suspension mittels Teflontauchrohr auf eine Filterfritte gedrückt, gewaschen (erst mit Shellsol^{®}, dann dreimal mit Pentan) und bei RT bis zur Gewichtskonstanz getrocknet. Es wurden 25,7 g eines dunkelgrauen, frei fließenden Pulvers erhalten.

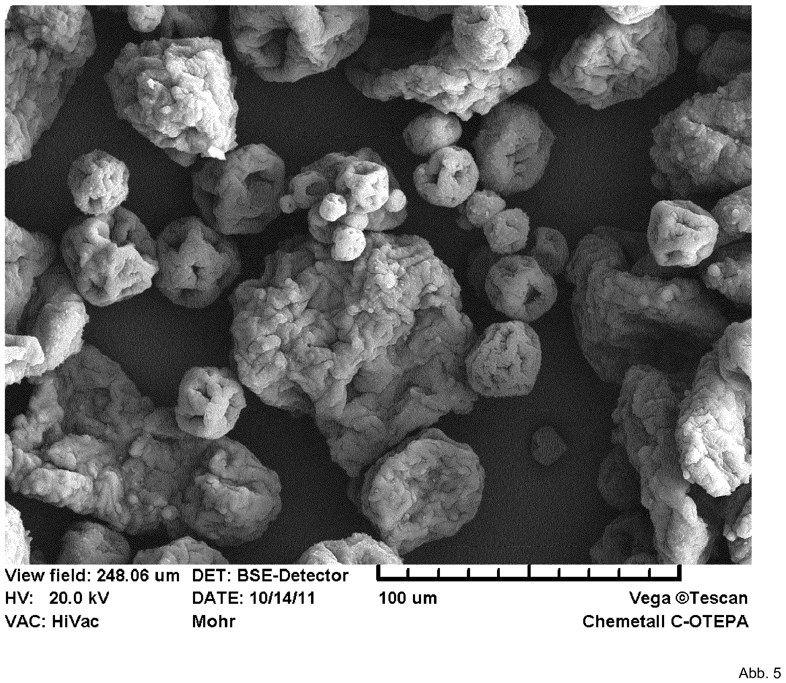

Das Pulver bestand aus unregelmäßig-ellipsoiden sowie kugelförmigen Partikeln mit einer starken Oberflächenzerklüftung (s. Abb. 5) und hatte einen Metallgehalt von 79,6 Gew.-% (gasvolumetrische Bestimmung durch Hydrolyse). Das Material hatte eine mittlere Teilchengröße von 55 µm. Der Kohlenstoffgehalt betrug 3,4 Gew.-%, das entspricht hochgerechnet auf den Schalenanteil von 20,4 Gew.-% einer Schalenkonzentration von 16,7 Gew.-%.

### Stabilität des erfindungsgemäßen Produktes aus Beispiel 1 in N-Methylpyrrolidon (NMP), DSC-Tests

Für DSC-Tests ("differential scanning calorimetry") wurde eine Apparatur der Firma Systag, Schweiz (das Radex-System) eingesetzt. In die Probengefäße wurden unter
Schutzgasatmosphäre 2 g N-Methylpyrrolidon (NMP) und 0,1 g des Untersuchungsproduktes eingewogen. Die Proben wurden bei bestimmten Temperaturen 15 h gelagert.

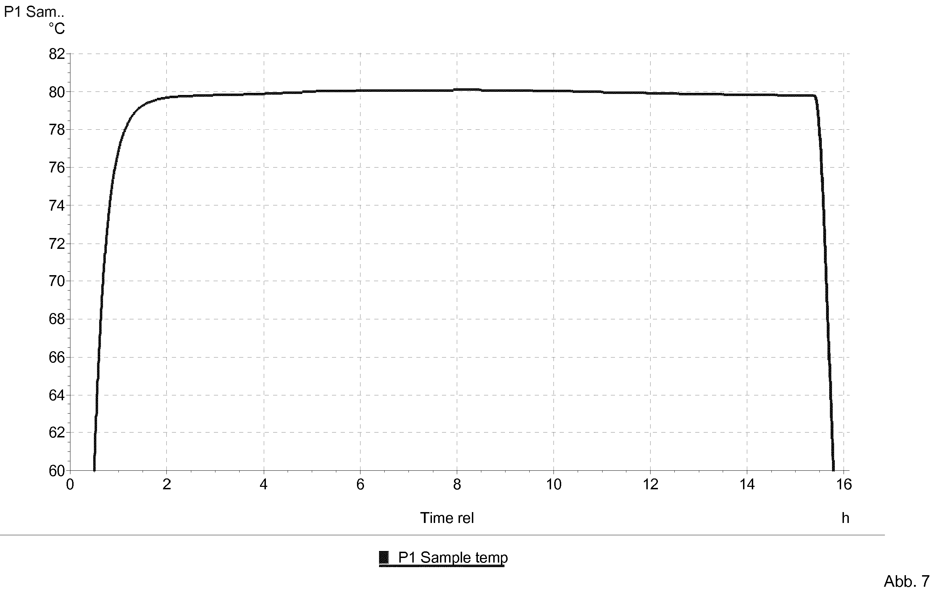

Bei 80°C-Lagerung des erfindungsgemäßen Materials werden keinerlei thermische Effekte beobachtet (Abb. 7). Weitere Tests zeigten, dass Mischungen mit NMP bis etwa 110°C stabil sind.

### Beispiel 2: Herstellung von Li₂S@C-beschichtetem Lithium aus geschmolzenem Lithiummetall und 0,3 mol-% CS₂ bei 200°C in Paraffinöl

In einem inertisierten (d.h. wasser- und luftfreiem, mit Ar gefüllten) Edelstahl-Doppelmantelreaktor ausgerüstet mit einem Hochenergierührorgan (Ultraturrax) wurden 19,4 g Lithiummetall in 500 g Shellsol^{®} D100 vorgelegt und unter Rühren bei 210°C Manteltemperatur aufgeschmolzen. Nach vollständigem Aufschmelzen wurde das Lithium mit Hilfe des Hochenergierührers zu einer feinen Emulsion verarbeitet (einige Minuten bei 16.000 upm). Dann wurden 0,64 g Kohlendisulfid als 20%ige Lösung in Shellsol^{®} D100 durch eine Reaktoröffnung zugegeben. Die Reaktion war exotherm, erkennbar an einem Anstieg der Innentemperatur von etwa 207°C auf knapp 210°C. Nach Zugabeende wurde der Rührer abgestellt, dann auf 80°C abgekühlt und die Suspension mittels Teflontauchrohr auf eine Filterfritte gedrückt, gewaschen (erst mit Shellsol^{®}, dann dreimal mit Pentan) und bei RT bis zur Gewichtskonstanz getrocknet. Es wurden 19,8 g eines dunkelgrauen, frei fließenden Pulvers erhalten.

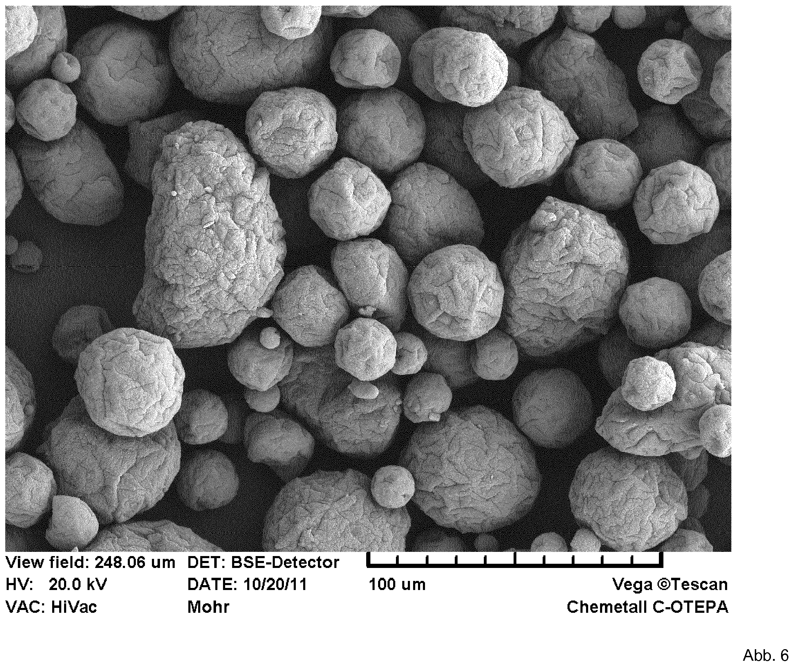

Das Pulver bestand aus weitgehend kugelförmigen Partikeln mit mäßiger Oberflächenzerklüftung (s. Abb. 6) und hatte einen Metallgehalt von 98,2 Gew.-% (gasvolumetrische Bestimmung durch Hydrolyse). Der Kohlenstoffgehalt betrug 0,23 Gew.-%, entsprechend 13 Gew.-% bezogen auf den Anteil der Partikelschalen.

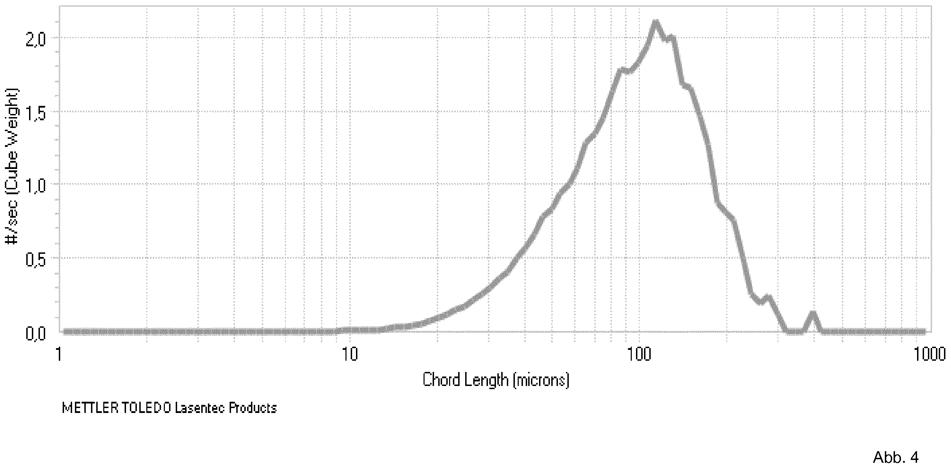

Das Material hatte eine mittlere Teilchengröße von 107 µm (s. Abb. 4).

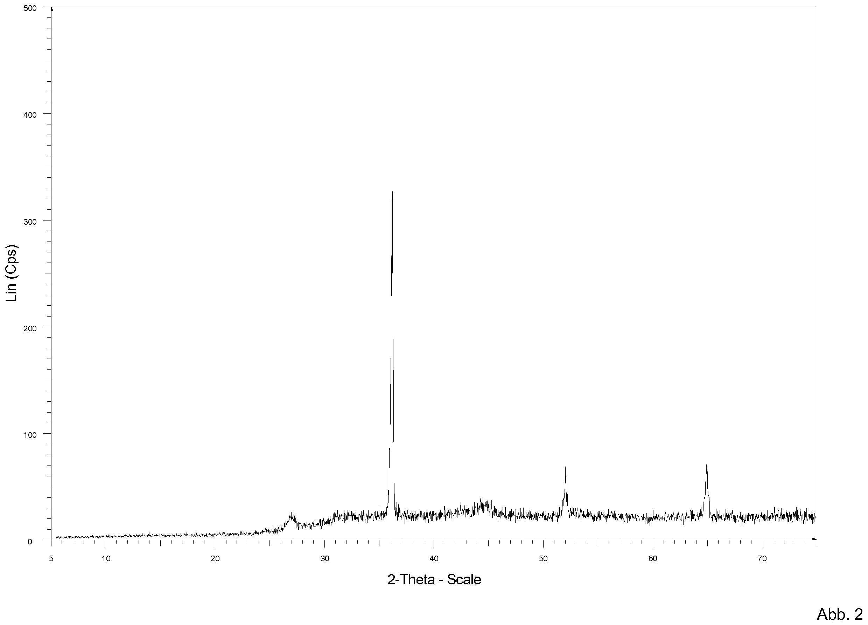

Per Röntgendiffraktometrie wird neben Spuren an Lithiumsulfid Lithiumsulfid Lithiummetall als hauptsächliche kristalline Phasen nachgewiesen (Abb. 2).

### Stabilität des erfindungsgemäßen Produktes aus Beispiel 2 in NMP DSC-Tests

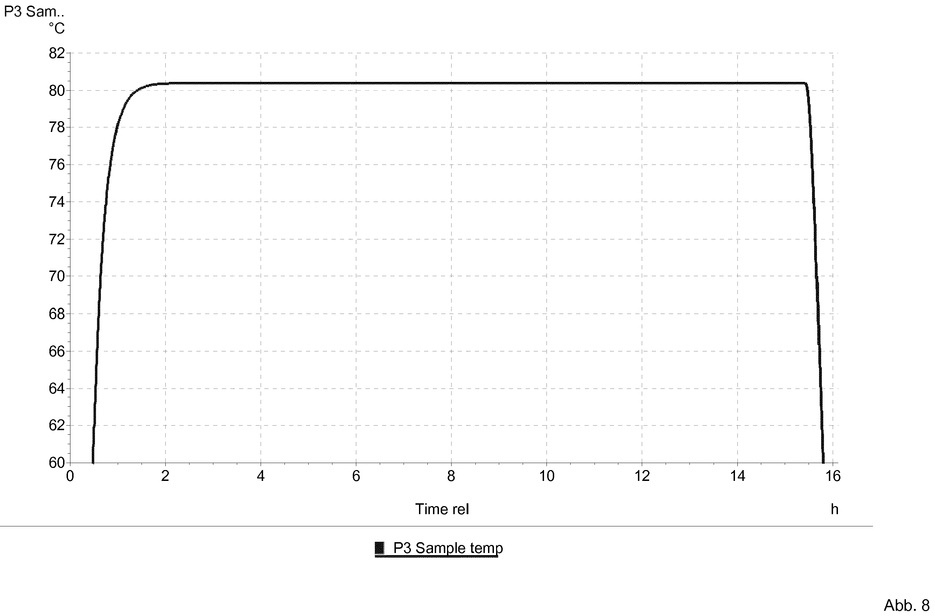

Bei 80°C-Lagerung des erfindungsgemäßen Materials werden keinerlei thermische Effekte beobachtet (Abb. 8). Weitere Tests zeigten, dass Mischungen mit NMP bis etwa 120°C stabil sind.

Teil der Offenbarung sind auch folgende Sachverhalte, welche jedoch nicht die Erfindung definieren. Die Erfindung wird ausschliesslich durch die Ansprüche definiert.
- Partikuläres Lithiummetall/Lithiumsulfid-Kompositmaterial, welches eine Kern/Schale-Morphologie besitzt, wobei die Schale aus einem C-haltigen Lithiumsulfid besteht und der Kern aus metallischem Lithium.
- Kompositmaterial, wobei höchstens 50 Gew.-%, bevorzugt höchstens 20 Gew.-% und besonders bevorzugt höchstens 5 Gew.-% des enthaltenen Lithiums in nichtmetallischer Form, also überwiegend als Lithiumsulfid, enthalten ist.
- Kompositmaterial, wobei der Kohlenstoffgehalt der Li2S@C - Schale zwischen 0,1 und 50 Gew.-%, bevorzugt zwischen 1 und 30 Gew.-% liegt.
- Kompositmaterial, wobei die Reinheit des eingesetzten Lithiummetalls mindestens 98 Gew.-% beträgt.
- Kompositmaterial, wobei der der Gehalt an Natrium bezogen auf den Gesamtlithiumgehalt maximal 1000, bevorzugt maximal 100 ppm beträgt.
- Kompositmaterial, wobei die einzelnen Partikel nicht größer als 500 µm sind.
- Kompositmaterial, wobei die mittlere Partikelgröße zwischen 1 und 500 µm, bevorzugt zwischen 10 und 100 µm und besonders bevorzugt zwischen 15 und 80 µm beträgt.
- Verfahren zur Herstellung eines partikulären Lithiummetall/Lithiumsulfid-Kompositmaterials, wobei geschmolzenes, tröpfchenförmiges Lithiummetall in einem Kohlenwasserstofflösungsmittel mit einer Schwefelquelle ausgewählt aus der Gruppe CS₂, S₈, H₂S, COS, SO, SO₂ oder Mischungen daraus umgesetzt wird.
- Verfahren, bei dem als Schwefelquelle bevorzugt reines Kohlendisulfid oder eine Mischung aus Kohlendisulfid und Schwefel und/oder Schwefelwasserstoff eingesetzt wird.
- Verfahren, bei dem die Umsetzung bei Temperaturen im Bereich von 180°C bis 300°C, bevorzugt 180°C bis 250°C und besonders bevorzugt 180°C bis 220°C vorgenommen wird.
- Verfahren, bei dem als Kohlenwasserstofflösungsmittel bevorzugt gesättigte Lösungsmittel verwendet werden, die bei den gewählten Umsetzungsbedingungen flüssig sind, die also Siedepunkte von mindestens 180°C, vorzugsweise mindestens 200°C und besonders bevorzugt Siedepunkte > 200°C aufweisen.
- Verfahren, bei dem als Kohlenwasserstofflösungsmittel bevorzugt Decan, Undekan, Dodecan oder beliebige Mischungen dieser genannten Verbindungen, egal ob linear, verzweigt oder zyklisch eingesetzt werden.
- Verfahren, bei dem als Kohlenwasserstofflösungsmittel besonders bevorzugt kommerziell erhältliche Paraffin-Siedeschnitte, wie z.B. Shellsol^{®} D70 oder D100 verwendet wird.
- Verwendung des partikulären Lithiummetall/Lithiumsulfid-Kompositmaterials für die Herstellung von Lithiumbatterieelektroden.
- Verwendung des partikulären Lithiummetall/Lithiumsulfid-Kompositmaterials für die Herstellung von Anoden für Lithium-Schwefelbatterien.

## Patentansprüche

1. Partikuläres Lithiummetall/Lithiumsulfid-Kompositmaterial, welches eine Kern/Schale-Morphologie besitzt, wobei die Schale aus einem C-haltigen Lithiumsulfid besteht und der Kern aus metallischem Lithium, dadurch charakterisiert, dass maximal 50 Gew.-% des enthaltenen Lithiums in nicht-metallischer Form enthalten ist.

2. Kompositmaterial nach Anspruch 1, **dadurch gekennzeichnet, dass** bis 20 Gew.-% des enthaltenen Lithiums in nicht-metallischer Form, enthalten ist.

3. Kompositmaterial nach Anspruch 2, **dadurch gekennzeichnet, dass** bis 5 Gew.-% des enthaltenen Lithiums in nicht-metallischer Form, enthalten ist.

4. Kompositmaterial nach Anspruch 1 bis 3, **dadurch gekennzeichnet, dass** der Kohlenstoffgehalt der C-haltigen Lithiumsulfid - Schale zwischen 0,1 und 50 Gew.-%, bevorzugt zwischen 1 und 30 Gew.-% liegt.

5. Kompositmaterial nach Anspruch 1 bis 4, **dadurch gekennzeichnet, dass** die Reinheit des eingesetzten Lithiummetalls mindestens 98 Gew.-% beträgt.

6. Kompositmaterial nach Anspruch 1 bis 45, **dadurch gekennzeichnet, dass** der Natrium-Gehalt des Kompositmaterials bezogen auf den Gesamtlithiumgehalt maximal 1000, bevorzugt maximal 100 ppm beträgt.

7. Kompositmaterial nach Anspruch 1 bis 6, **dadurch gekennzeichnet, dass** die einzelnen Partikel nicht größer als 500 µm sind.

8. Kompositmaterial nach Anspruch 1 bis 7, **dadurch gekennzeichnet, dass** die mittlere Partikelgröße zwischen 1 und 500 µm, bevorzugt zwischen 10 und 100 µm und besonders bevorzugt zwischen 15 und 80 µm beträgt.

9. Verfahren zur Herstellung eines partikulären Lithiummetall/Lithiumsulfid-Kompositmaterials gemäß Anspruch 1 bis 8, **dadurch gekennzeichnet, dass** geschmolzenes, tröpfchenförmiges Lithiummetall in einem Kohlenwasserstofflösungsmittel mit einer Schwefelquelle ausgewählt aus der Gruppe CS₂, S₈, H₂S, COS, SO, SO₂ oder Mischungen daraus umgesetzt wird, wobei das Molverhältnis zwischen Lithium und Gesamtschwefel 4:1 beiträgt.

10. Verfahren nach Anspruch 9, bei dem als Schwefelquelle bevorzugt reines Kohlendisulfid oder eine Mischung aus Kohlendisulfid und Schwefel und/oder Schwefelwasserstoff eingesetzt wird, wobei das Molverhältnis zwischen Lithium und Gesamtschwefel 10:1 beiträgt.

11. Verfahren nach Anspruch 10, bei dem als Schwefelquelle bevorzugt reines Kohlendisulfid oder eine Mischung aus Kohlendisulfid und Schwefel und/oder Schwefelwasserstoff eingesetzt wird, wobei das Molverhältnis zwischen Lithium und Gesamtschwefel 40:1 beträgt.

12. Verfahren nach Anspruch 9 bis 11, **dadurch gekennzeichnet, dass** die Umsetzung bei Temperaturen im Bereich von 180°C bis 300°C, bevorzugt 180°C bis 250°C und besonders bevorzugt 180°C bis 220°C vorgenommen wird.

13. Verfahren nach Anspruch 9 bis 12, **dadurch gekennzeichnet, dass** als Kohlenwasserstofflösungsmittel eines ausgewählt aus der Gruppe bestehend aus Decan, Undekan, Dodecan oder beliebige Mischungen dieser genannten Verbindungen, eingesetzt wird.

14. Verwendung des partikulären Lithiumsulfid/Kohlenstoff-Kompositmaterials gemäß Anspruch 1 bis 8 für die Herstellung von Lithiumbatterieelektroden.

15. Verwendung des partikulären Lithiummetall/Lithiumsulfid-Kompositmaterials gemäß Anspruch 1 bis 8 für die Herstellung von Anoden für Lithium-Schwefelbatterien.

## Claims

1. A particulate lithium metal/lithium sulphide composite material which has a core/shell morphology, wherein the shell consists of a C-containing lithium sulphide, and the core consists of metallic lithium, **characterised in that** maximally 50% by weight of the lithium contained is contained in a non-metallic form.

2. A composite material according to claim 1, **characterised in that** up to 20% by weight of the lithium contained is contained in a non-metallic form.

3. A composite material according to claim 2, **characterised in that** up to 5% by weight of the lithium contained is contained in a non-metallic form.

4. A composite material according to claim 1 to 3, **characterised in that** the carbon content of the C-containing lithium-sulphide shell lies between 0.1 and 50% by weight, preferably between 1 and 30% by weight.

5. A composite material according to claim 1 to 4, **characterised in that** the purity of the lithium metal used amounts to at least 98% by weight.

6. A composite material according to claim 1 to 5, **characterised in that** the sodium content of the composite material relative to the total lithium content amounts to maximally 1000, preferably maximally 100 ppm.

7. A composite material according to claim 1 to 6, **characterised in that** the individual particles are not larger than 500 µm.

8. A composite material according to claim 1 to 7, **characterised in that** the average particle size amounts to between 1 and 500 µm, preferably between 10 and 100 µm and particularly preferably between 15 and 80 µm.

9. A method for producing a particulate lithium metal/lithium sulphide composite material according to claim 1 to 8, **characterised in that** molten, droplet-shaped lithium metal is reacted in a hydrocarbon solvent with a sulphur source selected from the group: CS₂, S₈, H₂S, COS, SO, SO₂, or mixtures thereof, wherein the molar ratio between lithium and the total sulphur amounts to 4:1.

10. A method according to claim 9, in which pure carbon disulphide or a mixture of carbon disulphide and sulphur and/or hydrogen sulphide is used as the sulphur source, wherein the molar ratio between lithium and the total sulphur amounts to 10:1.

11. A method according to claim 10, in which pure carbon disulphide or a mixture of carbon disulphide and sulphur and/or hydrogen sulphide is used as the sulphur source, wherein the molar ratio between lithium and the total sulphur amounts to 40:1.

12. A method according to claim 9 to 11, **characterised in that** the reaction is carried out at temperatures in the range of 180°C to 300°C, preferably 180°C to 250°C, and particularly preferably 180°C to 220°C.

13. A method according to claim 9 to 12, **characterised in that** the hydrocarbon solvent used is one selected from the group consisting of decane, undecane, dodecane or any mixtures of these compounds mentioned.

14. Use of the particulate lithium sulphide/carbon composite material according to claim 1 to 8 for the production of lithium-battery electrodes.

15. Use of the particulate lithium metal/lithium sulphide composite material according to claim 1 to 8 for the production of anodes for lithium-sulphur batteries.

## Revendications

1. Matériau composite (lithium métallique)/(sulfure de lithium) en particules, présentant une morphologie de type noyau/coque avec une coque en sulfure de lithium contenant du carbone et un noyau en lithium métallique, **caractérisé en ce qu'**au maximum 50 % en poids du lithium qui y est contenu se trouve sous forme non-métallique.

2. Matériau composite conforme à la revendication 1, **caractérisé en ce que** jusqu'à 20 % en poids du lithium qui y est contenu se trouve sous forme non-métallique.

3. Matériau composite conforme à la revendication 2, **caractérisé en ce que** jusqu'à 5 % en poids du lithium qui y est contenu se trouve sous forme non-métallique.

4. Matériau composite conforme à l'une des revendications 1 à 3, **caractérisé en ce que** la teneur en carbone de la coque en sulfure de lithium contenant du carbone vaut entre 0,1 et 50 % en poids, et de préférence, entre 1 et 30 % en poids.

5. Matériau composite conforme à l'une des revendications 1 à 4, **caractérisé en ce que** la pureté du lithium métallique utilisé vaut au moins 98 % en poids.

6. Matériau composite conforme à l'une des revendications 1 à 5, **caractérisé en ce que** la teneur en sodium du matériau composite, par rapport à sa teneur totale en lithium, vaut au maximum 1000 ppm, et de préférence, au maximum 100 ppm.

7. Matériau composite conforme à l'une des revendications 1 à 6, **caractérisé en ce que** les particules individuelles ne sont pas d'une taille supérieure à 500 µm.

8. Matériau composite conforme à l'une des revendications 1 à 7, **caractérisé en ce que** la taille moyenne des particules vaut entre 1 et 500 µm, de préférence entre 10 et 100 µm, et mieux encore entre 15 et 80 µm.

9. Procédé de fabrication d'un matériau composite (lithium métallique)/(sulfure de lithium) en particules, conforme à l'une des revendications 1 à 8, **caractérisé en ce que** l'on fait réagir du lithium métallique fondu, sous forme de gouttelettes, dans un solvant hydrocarbure, avec une source de soufre choisie dans l'ensemble formé par les corps de formules CS₂, S₈, H₂S, COS, SO et SO₂ et leurs mélanges, en un rapport molaire de 4/1 entre le lithium et la totalité du soufre.

10. Procédé conforme à la revendication 9, dans lequel on utilise de préférence, en tant que source de soufre, du disulfure de carbone pur ou un mélange de disulfure de carbone et de soufre et/ou de sulfure d'hydrogène, en un rapport molaire de 10/1 entre le lithium et la totalité du soufre.

11. Procédé conforme à la revendication 10, dans lequel on utilise de préférence, en tant que source de soufre, du disulfure de carbone pur ou un mélange de disulfure de carbone et de soufre et/ou de sulfure d'hydrogène, en un rapport molaire de 40/1 entre le lithium et la totalité du soufre.

12. Procédé conforme à l'une des revendications 9 à 11, **caractérisé en ce que** l'on effectue la réaction à une température située dans la gamme de 180 à 300 °C, de préférence de 180 à 250 °C, et mieux encore de 180 à 220 °C.

13. Procédé conforme à l'une des revendications 9 à 12, **caractérisé en ce que** le solvant hydrocarbure utilisé est choisi dans l'ensemble formé par les décane, undécane et dodécane et tout mélange de ces composés.

14. Utilisation d'un matériau composite (lithium métallique)/- (sulfure de lithium) en particules, conforme à l'une des revendications 1 à 8, pour la fabrication d'électrodes d'accumulateur au lithium.

15. Utilisation d'un matériau composite (lithium métallique)/- (sulfure de lithium) en particules, conforme à l'une des revendications 1 à 8, pour la fabrication d'anodes d'accumulateur au lithium-soufre.
